# EUROPÄISCHE PATENTSCHRIFT

(11) **EP 3 828 035 B1**
(45) Veröffentlichungstag und Bekanntmachung des Hinweises auf die Patenterteilung: **04.01.2023**
(21) Anmeldenummer: 20214648.6
(22) Anmeldetag: 14.03.2013
(51) Int. Cl.: B60Q 3/64, B60Q 3/78

(54) **BELEUCHTUNGSEINRICHTUNG, INSBESONDERE EINE KONTURBELEUCHTUNG FÜR EIN KRAFTFAHRZEUG**
LIGHTING DEVICE, IN PARTICULAR CONTOUR LIGHTING FOR A MOTOR VEHICLE
DISPOSITIF D'ÉCLAIRAGE, EN PARTICULIER ÉCLAIRAGE DE CONTOUR POUR VÉHICULE AUTOMOBILE

(30) Priorität: 16.03.2012 DE 102012005397
(43) Veröffentlichungstag der Anmeldung: 02.06.2021
(62) Teilanmeldung aus: 13711571.3
(73) Patentinhaber: Audi AG, 85045 Ingolstadt (DE)
(72) Erfinder: PFEIL, Marcus, 90537 Feucht (DE); WEHRLIN, Peter, 74172 Neckarsulm (DE)

(56) Entgegenhaltungen:
- WO-A1-2004/078518
- DE-U1-202008 008 877
- DE-U1-202010 005 663
- FR-A1- 2 782 161
- JP-A- 2010 143 338
- US-A1- 2002 121 154

## Beschreibung

Die Erfindung betrifft eine Beleuchtungseinrichtung, insbesondere Konturbeleuchtung für ein Kraftfahrzeug.

Beleuchtungseinrichtungen sind in unterschiedlichster Art und Form bekannt. Sie dienen einerseits zur Raumbeleuchtung, andererseits aber mitunter auch zur Kenntlichmachung oder Hervorhebung bestimmter Gegenstände oder Objekte. Derartige Beleuchtungen werden häufig Konturbeleuchtungen genannt, da sie optisch die Form oder Kontur eines hervorzuhebenden Gegenstandes betonen. Solche Konturbeleuchtungen kommen sowohl bei Geräten oder Maschinen, aber beispielsweise auch in einem Kraftfahrzeug zum Einsatz. Insbesondere dort finden sie beispielsweise Anwendung bei Lautsprechern, Tastern und Bedienfelder, Cupholdern etc. Diese Beleuchtungseinrichtungen sind letztlich Leuchtstreifen, die bestimmte Konturen hervorheben bzw. betonen sollen. Üblicherweise sind solche Konturbeleuchtungen, also Linienbeleuchtungen, mittels eines Lichtleiters realisiert, der entlang der hervorzuhebenden Kontur verläuft. Dieser Lichtleiter ist entweder direkt einsehbar, oder hinter einer davor angeordneten Streuscheibe verbaut. In den Lichtleiter wird Licht an einer Stirnseite eingekoppelt, das Licht tritt seitlich längs des Lichtleiters aus, so dass letztlich ein linienförmiger Lichtstreifen sichtbar ist.

Um die Eigenschaften eines solchen Licht leitenden Elements wie beispielsweise eines Lichtleiters nicht negativ zu beeinflussen benötigt ein solches Element eine Mindestquerschnittsfläche von ca. 7 mm², wobei eine Höhe/Breite bzw. ein Durchmesser von 2,5 mm nicht unterschritten werden darf. Bei Streuscheiben sind die begrenzenden Parameter die Herstell- und Integrierbarkeit in den Bauraum. Heutige bekannte Konturbeleuchtungen weisen aus diesem Grund eine beachtliche Breite auf, d. h., dass der helle Lichtstreifen relativ breit ist, also üblicherweise ca. 2,5 mm oder mehr. Ein derart breiter Lichtstreifen ist jedoch in manchen Fällen nicht wünschenswert, sei es aus optischen Gründen, da beispielsweise das hervorzuhebende Bauteil relativ klein ist und ein derart breiter Lichtstreifen quasi überdimensioniert wäre, sei es aus baulichen Gründen, da sich mitunter ein derart breiter Lichtstreifen nicht immer integrieren lässt.

Eine Beleuchtungseinrichtung für ein Kraftfahrzeug ist beispielsweise aus der japanischen Offenlegungsschrift JP 2010 143338 A, welche einen beleuchteten Schiebeknopf für eine Belüftungsvorrichtung offenbart, bekannt. Weitere Beleuchtungseinrichtungen für Kraftfahrzeuge sind aus der französischen Offenlegungsschrift FR 2 782 161 A1, aus den deutschen Gebrauchsmusterschriften DE 20 2010 005663 U1 und DE 20 2008 008877 U1 sowie aus der US-Offenlegungsschrift US 2002/121154 A1 bekannt.

Der Erfindung liegt damit das Problem zugrunde, eine Beleuchtungseinrichtung, insbesondere in Form einer Konturbeleuchtung für ein Kraftfahrzeug, anzugeben, die es ermöglicht, einen sehr schmalen Lichtstreifen auszubilden.

Zur Lösung dieses Problems ist erfindungsgemäß eine Beleuchtungseinrichtung, insbesondere eine Konturbeleuchtung für ein Kraftfahrzeug vorgesehen, gemäß den Merkmalen von Anspruch 1. Vorteilhafte Ausgestaltungen sind in den Unteransprüchen vorgesehen.

Das Gehäuse der erfindungsgemäßen Beleuchtungseinrichtung, die bevorzugt als Konturbeleuchtung dient, ist ein längliches Bauteil, das Gehäuse selbst ist aus einem für Licht transparenten Kunststoffmaterial. Seine Grundform entspricht letztlich der Form des Bauteils, das über die Konturbeleuchtung hervorgehoben werden soll. Am Gehäuse selbst sind gegebenenfalls entsprechende Befestigungsmittel wie Rastelemente und dergleichen vorgesehen, um es am zu beleuchtenden Bauteil fixieren zu können.

Da das Gehäuse aus einem für eingekoppeltes Licht transparenten Kunststoffmaterial ist, ist es folglich möglich, in das Gehäuse Licht einzukoppeln und auszukoppeln. Dies geschieht mittels eines Lichtleiters, der dem Gehäuse zugeordnet ist. Der Lichtleiter strahlt Licht zur Seite hin ab, dieses Licht wird in das Gehäuse eingekoppelt. Da das Gehäuse im verbauten Zustand nur abschnittsweise sichtbar ist, ist zumindest dieser Bereich mit einer für das eingekoppelte Licht nicht transparenten Beschichtung belegt, beispielsweise einer Lackierung oder einer Metallschicht zur Verleihung einer Metalloptik und dergleichen. Um nun eine sehr dünne Lichtaustrittslinie realisieren zu können, ist diese nicht transparente Schicht lokal entfernt, was beispielsweise durch mechanisches Abtragen oder durch Laserabtragen erfolgen kann. Hierüber kann also eine äußerst dünne Linie am Gehäuse freigelegt werden, dort also das Beschichtungsmaterial entfernt werden, so dass folglich, wenn Licht eingekoppelt wird, dieses durch eine sehr dünne Linie austreten kann respektive als sehr dünne Lichtlinie sichtbar ist. Damit ist es möglich, auf einfache Weise einen sehr schmalen Leuchtstreifen erzeugen zu können, um beispielsweise relativ kleine Bauteile konturmäßig hervorzuheben, oder um, wenn gewünscht, eben sehr schmale Konturbeleuchtungen realisieren zu können.

Die Lichtaustrittslinie, also der Bereich, in dem die Beschichtung entfernt ist, kann eine Breite < 1 mm, insbesondere zwischen 0,3 - 0,5 mm, aufweisen. Dies ist ohne weiteres möglich, wenn wie beschrieben die Beschichtung mechanisch oder mit Laser abgetragen wird.

Erfindungsgemäß weist das Gehäuse eine Aufnahme für einen Lichtleiter auf, der das über die Lichtaustrittslinie abzugebende Licht in das Gehäuse emittiert. D. h., dass der Lichtleiter direkt in oder an das Gehäuse selbst gebracht wird, mithin also unmittelbar in das Kunststoffgehäuse Licht emittiert. Die Aufnahme, die ohne weiteres in das Gehäuse, das bevorzugt ein einfaches Kunststoffspritzbauteil ist, eingebracht werden kann, entspricht in ihrer Querschnittsform der Querschnittsform des Lichtleiters, so dass dieser auf einfache Weise beispielsweise über eine Klemmpassung, also einer Art Formschluss, am Gehäuse fixiert werden kann.

Die Beschichtung selbst ist ein Lack, eine aufgedampfte Schicht oder eine galvanisch abgeschiedenen Schicht. Da diese Beschichtung sichtbar ist, kann das Beschichtungsmaterial je nach gewünschter Sichtoptik verwendet werden. Wird eine Metallbeschichtung aufgebracht, so wird der Beleuchtungseinrichtung letztlich eine Metalloptik verliehen, wird ein Lack aufgebracht, so kann sie farbgleich wie das konturmäßig zu beleuchtende Bauteil ausgelegt werden.

Neben der Beleuchtungseinrichtung selbst betrifft die Erfindung ferner ein Kraftfahrzeug gemäß Anspruch 5, umfassend wenigstens eine erfindungsgemäße Beleuchtungseinrichtung.

Weitere Vorteile, Merkmale und Einzelheiten der Erfindung ergeben sich aus den im Folgenden ausgeführten Ausführungsbeispielen sowie anhand der Zeichnung:

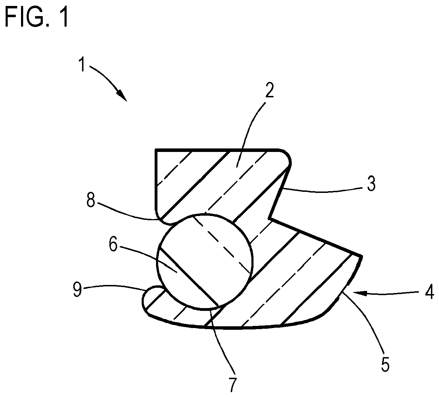

- Fig. 1: stellt eine Prinzipdarstellung einer erfindungsgemäßen Beleuchtungseinrichtung einer ersten Ausführungsform im Querschnitt dar.

Fig. 1 zeigt eine erfindungsgemäße Beleuchtungseinrichtung 1, umfassend ein Gehäuse 2 aus einem für in das Gehäuse eingekoppeltes Licht transparenten Kunststoff, beispielsweise PMMA. Das Gehäuse ist länglich, Fig. 1 zeigt lediglich eine Schnittansicht. Seine Grundform entspricht letztlich der Form des Bauteils respektive der Kontur, die beleuchtet werden soll.

Der in Fig. 1 gezeigte Querschnitt ist lediglich exemplarisch. Selbstverständlich weist das Gehäuse eine Querschnittsform auf, die es ermöglicht, dort befestigt oder integriert werden zu könne, wo es beispielsweise kraftfahrzeugseitig verbaut werden soll. D. h., dass die Darstellung keinesfalls abschließend ist. Selbstverständlich ist es möglich, am Gehäuse entsprechende Rast- oder Klemmelemente und ähnliches auszubilden, wie dies beispielsweise über die Stufe angedeutet ist.

Das Gehäuse 2 zwar selbst ist über seine nahezu gesamte Fläche im gezeigten Beispiel mit einer Beschichtung 3 versehen, beispielsweise einem Lack, einer aufgedampften Schicht oder einer galvanisch abgeschiedenen Schicht. Diese Schicht ist für in das Gehäuse 2 eingekoppelte Licht nicht transparent. Lediglich im Bereich 4 ist die Beschichtung entfernt, so dass sich dort, also an der Sichtseite, eine Lichtaustrittslinie 5 ergibt, aus der in das Gehäuse zwar eingekoppeltes Licht austreten kann.

Im gezeigten Ausführungsbeispiel wird das Licht in das Gehäuse 2 mittels eines Lichtleiters 6 eingekoppelt. Der Lichtleiter 6 ist unmittelbar im Gehäuse 2 aufgenommen. Hierzu ist im Gehäuse 2 eine im gezeigten Beispiel querschnittliche im Wesentliche runde Aufnahme 7 ausgebildet, in die der querschnittliche ebenfalls runde Lichtleiter 6 eingesetzt ist. Dies ist ohne weiteres über einen leichten Klemmsitz möglich, in dem, wie gezeigt, eine beidseitige leichte Hinterschneidung realisiert ist, nämlich mittels der beiden Schultern 8, 9.

Wird nun Licht in den Lichtleiter 6 von einer Stirnseite her eingekoppelt, so läuft das Licht durch den Lichtleiter 6. Aufgrund der Lichtleiterstruktur wird das Licht nicht nur längs geführt, sondern auch zur Seite ausgekoppelt und zwangsläufig in das Gehäuse 2 eingekoppelt. Dort kann es lediglich über die Lichtaustrittslinie 5 nach außen austreten, ist also dort in Form einer dünnen Lichtlinie, die die Konturbeleuchtung bildet, sichtbar.

Die Breite der Lichtaustrittslinie 5 liegt im bevorzugten Bereich zwischen 0,3 - 0,5 mm. Das Gehäuse selbst ist bevorzugt aus PMMA, jedoch kann auch ein anderer Kunststoff, solange er hinreichend transparent für das in ihm geführte Licht ist, verwendet werden.

Gleichermaßen ist denkbar, auch ein eingefärbtes Kunststoffmaterial zu verwenden, wenn eine farbige Lichtemission zur Bildung des Konturlichts stattfinden soll.

## Patentansprüche

1. Beleuchtungseinrichtung, insbesondere Konturbeleuchtung für ein Kraftfahrzeug,
mit einem Gehäuse (2) aus einem für in das Gehäuse eingekoppeltes Licht transparenten Kunststoffmaterial, das als Streuscheibe fungiert und zumindest in dem Bereich seiner Außenseite, der in der Montagestellung sichtbar ist, mit einer für das eingekoppelte Licht nicht transparenten Beschichtung (3) belegt ist, die lokal zur Bildung einer schmalen Lichtaustrittslinie (5) entfernt ist, und mit einem Lichtleiter (6), der das über die Lichtaustrittslinie abzugebende Licht in das Gehäuse emittiert,
wobei das Gehäuse (2) eine Aufnahme (7) für den Lichtleiter (6) aufweist,
**dadurch gekennzeichnet, dass**
die Beschichtung (3) ein Lack, eine aufgedampfte Schicht oder eine galvanisch abgeschiedene Schicht ist, und
der Lichtleiter (6) eine derartige Lichtleiterstruktur aufweist, dass von einer Stirnseite des Lichtleiters (6) her eingekoppeltes Licht den Lichtleiter (6) durchläuft, wobei das Licht nicht nur längs geführt, sondern auch zur Seite ausgekoppelt und zwangsläufig in das Gehäuse eingekoppelt wird.

2. Beleuchtungseinrichtung nach Anspruch 1,
**dadurch gekennzeichnet,**
**dass** die Beschichtung (3) mechanisch oder mittels Laser abgetragen ist.

3. Beleuchtungseinrichtung nach einem der vorangehenden Ansprüche,
**dadurch gekennzeichnet,**
**dass** das Gehäuse (2) aus PMMA ist.

4. Beleuchtungseinrichtung nach einem der vorangehenden Ansprüche,
**dadurch gekennzeichnet,**
**dass** das Kunststoffmaterial eingefärbt ist.

5. Kraftfahrzeug, umfassend wenigstens eine Beleuchtungseinrichtung (1) nach einem der vorangehenden Ansprüche.

## Claims

1. Lighting device, in particular contour lighting for a motor vehicle
having a housing (2), made of a plastic material which is transparent for light coupled into the housing, which functions as a diffuser and is covered, at least in the area of its outer side which is visible in the mounting position, with a coating (3) which is not transparent for the coupled-in light, which is locally removed for forming a narrow light-emission line (5), and having a light guide (6) which emits the light to be outputted via the light-emission line into the housing,
wherein the housing (2) has a receptacle (7) for the light guide (6),
**characterised in that**
the coating (3) is a lacquer, a vapour-deposited layer or a galvanically desposited layer, and
the light guide (6) has a light-guide structure such that coupled-in light passes through the light guide from an end face of the light guide, wherein the light is not only conducted longitudinally but is also coupled-out to the side and inevitably is coupled into the housing.

2. Lighting device according to claim 1,
**characterised in**
**that** the coating (3) is removed mechanically or by means of laser.

3. Lighting device according to any of the preceding claims,
**characterised in**
**that** the housing (2) is made of PMMA.

4. Lighting device according to any of the preceding claims,
**characterised in**
**that** the plastic material is coloured.

5. Motor vehicle comprising at least one lighting device (1) according to any of the preceding claims.

## Revendications

1. Dispositif d'éclairage, en particulier éclairage de contour pour un véhicule automobile,
avec un boîtier (2) en matière plastique transparente à la lumière introduite dans le boîtier, qui agit comme une vitre diffusante et est recouvert, au moins dans la zone de son côté extérieur, qui est visible en position de montage, d'un revêtement (3) qui n'est pas transparent à la lumière introduite, qui est retiré localement pour former une étroite ligne d'émission de lumière (5), et avec un guide de lumière (6) qui émet dans le boîtier la lumière à émettre par la ligne d'émission de lumière,
dans lequel le boîtier (2) présente un logement (7) pour le guide de lumière (6),
**caractérisé en ce que**
le revêtement (3) est un vernis, une couche déposée par évaporation ou une couche déposée galvaniquement, et
le guide de lumière (6) présente une structure de guide de lumière telle que de la lumière introduite par une face frontale du guide de lumière (6) traverse le guide de lumière (6), dans lequel la lumière est non seulement guidée longitudinalement, mais aussi émise latéralement et introduite de force dans le boîtier.

2. Dispositif d'éclairage selon la revendication 1,
**caractérisé en ce**
**que** le revêtement (3) est enlevé mécaniquement ou au moyen d'un laser.

3. Dispositif d'éclairage selon l'une quelconque des revendications précédentes,
**caractérisé en ce**
**que** le boîtier (2) est en PMMA.

4. Dispositif d'éclairage selon l'une quelconque des revendications précédentes,
**caractérisé en ce**
**que** la matière plastique est colorée.

5. Véhicule automobile, comprenant au moins un dispositif d'éclairage (1) selon l'une quelconque des revendications précédentes.
